# EUROPEAN PATENT SPECIFICATION

(11) **EP 0 954 213 B1**
(45) Date of publication and mention of the grant of the patent: **02.05.2003**
(21) Application number: 97950482.6
(22) Date of filing: 12.12.1997
(51) Int. Cl.: A01C 1/04

(54) **METHOD FOR CULTIVATING A PLANT USING A CULTURE BLOCK, CULTURE BLOCK AND APPARATUS FOR HANDLING SUCH BLOCKS**
VERFAHREN ZUM AUFZIEHEN EINER PFLANZE AUF EINEM ZUCHTBLOCK, ZUCHTBLOCK UND EINRICHTUNG ZUR BEHANDLUNG VON SOLCHEN BLÖCKEN
PROCEDE DE CULTURE D'UNE PLANTE A L'AIDE D'UN BLOC DE CULTURE, UN TEL BLOC ET DISPOSITIF DE MANIPULATION DE CES BLOCS

(30) Priority: 12.12.1996 NL 1004759
(43) Date of publication of application: 10.11.1999
(73) Proprietor: Plantenkwekerij G.N.M. Grootscholten B.V., 2671 MC Naaldwijk (NL)
(72) Inventor: MULDER, Jan, NL-2671 NP Naaldwijk (NL)
(74) Representative: Hoorweg, Petrus Nicolaas
(86) International application number: NL9700687
(87) International publication number: WO98025445

(56) References cited:
- EP-A- 0 389 355
- WO-A-94/16549
- DE-A- 3 844 418
- DE-A- 3 925 933
- FR-A- 2 164 010
- US-A- 5 247 761

## Description

The invention relates to method as disclosed in the heading of claim 1.

It is usual to germinate the seed on the positioning site, for instance a cavity of the culture block, and subsequently cause the plant to grow further to a determined size, whereafter the block with plant is further cultivated on a following substrate.

It is usual herein to protect the plant for germinating against diseases and fungi, for which purpose a number of options have developed in practice. It is possible to provide the plant with a coating, which coating contains a plant-protecting agent. During growth this agent is absorbed into the root system and plant material so that the plant becomes resistant.

It is also possible to spray the germinating plants with the plant-protecting agent, and it is finally possible to mix the material from which the substrate block is manufactured with plant-protecting agents before the material is pressed into a culture block. The drawback to such methods is that the coated seeds are relatively expensive and, due to the hygroscopic action of the coating, can easily become adhered to each other. This has an adverse effect on the sequential automatic feed of the seeds onto the successive culture blocks. Coating of the seeds in many cases limits the storage life or lifespan of the seeds and can also have a negative effect on the germinative power in the short term. The spraying method is dangerous for the surroundings and particularly for the person who must cultivate the plants. Mixing of the material of the block results in an excess quantity of the plant-protecting agent, which is likewise expensive and requires measures for handling of the blocks.

Other existing methods include the plant-protecting agent in a layer on which the seeds or the vegetatively reproduced starting material are deposited. Such a method is described in FR-A-2 164 010, where a plastic layer with open cells serves as mechanical support and nutritive stock for the seeds or plants. A similar method is known from DE 3844418 A1. This document describes a sticking foil consisting of a water-soluble paper or polymer foil and a water-soluble sticking layer which can for instance be placed underneath the seeds. Both methods have the disadvantages that the plant-protecting agent can only be introduced over the whole surface of the layer and not locally around the seeds. This leads to an excess use of the plant-protecting agent which increases the cost price and the environmental pollution.

Document US-A-5 247 761 discloses a method for cultivating a plant, wherein use is made a block-like unit of soil in which the seeds are planted. A liquid spray nozzle is used for softening the soil and in addition a similar nozzle can be directed to dibble a hole in the soil to facilitate the planting. These nozzles are not used to apply the liquid to a specific site on the soil and the liquid does not stay in the area around the seed or plant, but mixes with the whole soil-unit, which again leads to an excess use of the plant-protecting agent.

The invention has for its object to obviate the above stated drawbacks and provides to this end a method which is disclosed according the characterizing clause of claim 1.

The same favourable effect of the coated seed is achieved by administering plant-protecting agent according to the invention in the direct vicinity of or on the seed at the positioning site of the culture block. It is now possible however to suffice with "uncoated" seed, so that the above stated drawbacks of mutual adhesion do not occur. Seed can moreover be purchased comparatively cheaply.

Only a small quantity of a plant-protecting agent need be introduced at the location where the seed comes to lie for the substance to nevertheless be absorbed into the root system.

Since the substrate remains completely free of the plant-protecting agent on the outside, the usual manual work on the culture blocks can be carried out normally without any danger to the grower.

The invention further proposes to apply the agent to the positioning site prior to placing of the seed. This can take place according to the invention in droplet form, or otherwise by spraying the material if it is in the liquid phase. It is also possible to apply the agent in powder form to the positioning site of the block.

The invention relates also to an apparatus for handling culture blocks provided with a frame, a conveyor supported by the frame, a device deployed along the conveyor for placing a seed grain on the positioning site, such as a recessed portion of the block, and a feed member for covering only the positioning site and the seed with a covering means, wherein between the device and the feed member is arranged a feed nozzle for the protective agent which debouches above the positioning site of the blocks on the conveyor.

The invention will be further elucidated hereinbelow with reference to two embodiments of the method with a culture block provided with an upper surface with recessed portion as positioning site.

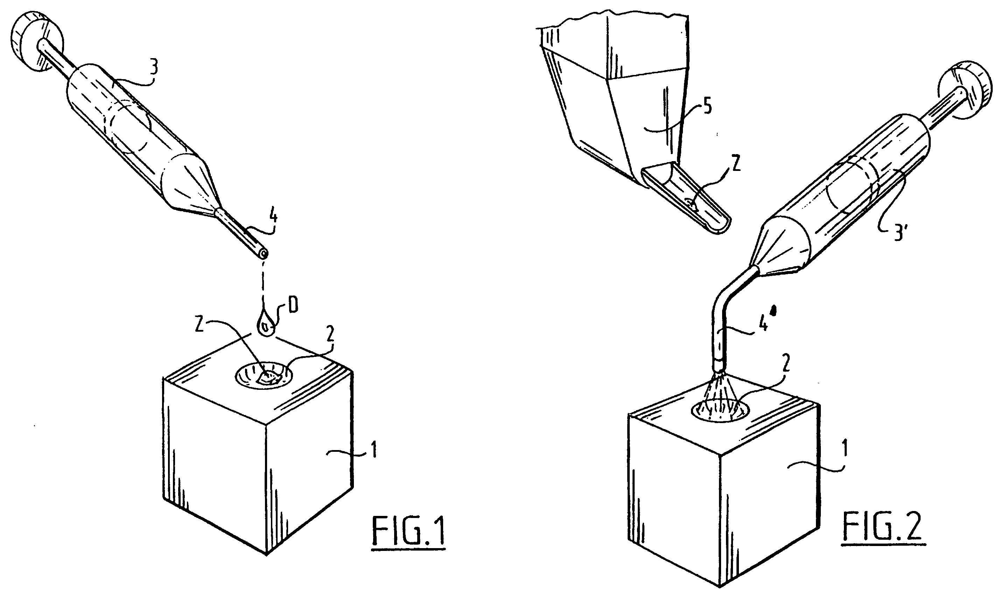

Fig. 1 and 2 each show a perspective view of a culture block which undergoes a method according to the invention in two different, schematically shown ways.

Designated with the numeral 1 is the culture block which is substantially rectangular and can be manufactured from random material. Use is made here for instance of rockwool, peat, agrofoam, perlite and so on.

The block is embodied here in the upper surface with a recessed portion 2 which can be cup-shaped, reverse conical or of other suitable form. It may however only be a positioning site of little or no depth. In the deepest part thereof a seed grain Z will normally come to lie after having been arranged in random manner, i.e. manually or via a mechanical feed device. A quantity of liquid can subsequently be applied dropwise to the seed grain itself by a liquid supply device 3.

Liquid supply device 3 is shown here as a cylinder with hand-operated piston and discharge tube 4 for supplying the droplet D. This is of course a schematic view of any random supply device, which may likewise be a part of the seed feed device.

Fig. 2 shows a block corresponding with fig. 1, wherein however the liquid supply device 3' is embodied such that an atomizing of the liquid from the spray nozzle 4' takes place. The seed feed device 5 can subsequently supply a seed Z to the mist sprayed recessed portion 2 of block 1, in which method seed Z is itself not therefore covered by the mist spray.

It is also possible with feed device 3 to supply plant-protecting material not in the form of liquid but as powder and to arrange it in the recessed portion 2 of block 1.

The method according to invention is not limited to the above described examples. It is noted that the seed can also be replaced by vegetatively reproduced starting material, for instance cuttings, tissue culture plants or artificial seed. This latter consists of plant cells which are placed "in solution" and which can then be "sown" as individual cell with or without coating.

## Claims

1. Method for cultivating a plant, starting from seed or vegetatively reproduced starting material (Z), wherein use is made of a block (1) with a positioning site (2) on the upper-surface for placing of the seed,said site extending over an area being smaller than said upper surface **characterized in that** a quantity of liquid with a plant-protecting agent or a plant protecting agent in powder form is placed on the positioning site only.

2. Method as claimed in 1, **characterized in that** the liquid is poured onto the positioning site in droplet form (D).

3. Method as claimed in 1, **characterized in that** the liquid is sprayed onto the positioning site.

4. Apparatus for handling culture blocks provided with a frame, a conveyor supported by the frame, a device deployed along the conveyor for placing a seed grain (5) on the positioning site of the block, and a feed member (3) for covering only the positioning site with a covering means, wherein between said device and the feed member a feed nozzle (4) is arranged for a plant-protecting agent which debouches above the positioning site of the blocks on the conveyor.

## Patentansprüche

1. Verfahren zum Kultivieren einer Pflanze, ausgehend von Samen oder vegetativ vermehrtem Ausgangsmaterial (Z), wobei ein Block (1) mit einer Aussaatstelle (2) auf der oberen Oberfläche zum Platzieren des Samens verwendet wird, wobei sich die Stelle über eine Fläche erstreckt, die kleiner als die obere Oberfläche ist, **dadurch gekennzeichnet, dass** eine Menge an Flüssigkeit mit einem Pflanzenschutzagens oder ein Pflanzenschutzagens in Pulverform nur auf der Aussaatstelle platziert wird.

2. Verfahren wie in Anspruch 1 beansprucht, **dadurch gekennzeichnet, dass** die Flüssigkeit in Tröpfchenform (D) auf die Aussaatstelle gegossen wird.

3. Verfahren wie in Anspruch 1 beansprucht, **dadurch gekennzeichnet, dass** die Flüssigkeit auf die Aussaatstelle gesprüht wird.

4. Vorrichtung zum Handhaben von Kulturblöcken, die mit einem Rahmen, einem vom Rahmen unterstützten Förderer, einer längs des Förderers angelegten Einrichtung zum Platzieren eines Samenkorns (5) an der Aussaatstelle des Blocks, und einem Zuführelement (3) zum Bedecken nur der Aussaatstelle und des Samens mit einem Bedeckungsmittel versehen ist, wobei zwischen der Einrichtung und dem Zuführelement eine Zuführdüse (4) für ein Pflanzenschutzagens angeordnet ist, das sich über der Aussaatstelle des Blocks auf dem Förderer ergießt.

## Revendications

1. Procédé pour cultiver une plante, en démarrant à partir d'une semence ou d'une matière de démarrage reproduite de manière végétative (Z), dans lequel on utilise un bloc (1) ayant un site de positionnement (2) sur la surface supérieure pour le placement de la semence, ledit site s'étendant sur une surface plus petite que ladite surface supérieure, **caractérisé en ce qu'**une quantité de liquide avec un agent de protection de plante ou un agent de protection de plante sous forme de poudre est placée sur le site de positionnement seulement.

2. Procédé selon la revendication 1, **caractérisé en ce que** le liquide est versé sur le site de positionnement sous forme de gouttelette (D).

3. Procédé selon la revendication 1, **caractérisé en ce que** le liquide est pulvérisé sur le site de positionnement.

4. Appareil pour manipuler des blocs de culture muni d'un châssis, d'un transporteur supporté par le châssis, d'un dispositif déployé le long du transporteur pour placer une graine de semence (5) sur le site de positionnement du bloc, et d'un élément d'alimentation (3) pour recouvrir seulement le site de positionnement par un moyen de couverture, dans lequel, entre ledit dispositif et l'élément d'alimentation, une buse d'alimentation (4) est agencée pour un agent de protection de plante, laquelle buse débouche au-dessus du site de positionnement des blocs sur le transporteur.
